# FASCICULE DE BREVET EUROPEEN

(11) **EP 2 795 870 B1**
(45) Date de publication et mention de la délivrance du brevet: **26.06.2019**
(21) Numéro de dépôt: 12812300.7
(22) Date de dépôt: 17.12.2012
(51) Int. Cl.: G06F 21/42, H04W 12/06, H04L 29/06

(54) **PROCEDE D'ACCES PAR UN TERMINAL DE TELECOMMUNICATION A UNE BASE DE DONNEES HEBERGEE PAR UNE PLATEFORME DE SERVICES ACCESSIBLE VIA UN RESEAU DE TELECOMMUNICATIONS**
VERFAHREN ZUR ERMÖGLICHUNG DES ZUGRIFFS EINES TELEKOMMUNIKATIONSENDGERÄTS AUF EINE VON EINER ÜBER EIN TELEKOMMUNIKATIONSNETZ ZUGÄNGLICHE DIENSTPLATTFORM GEHOSTETE DATENBANK
METHOD ENABLING A TELECOMMUNICATIONS TERMINAL TO ACCESS A DATABASE HOSTED BY A SERVICE PLATFORM THAT CAN BE ACCESSED VIA A TELECOMMUNICATIONS NETWORK

(30) Priorité: 23.12.2011 FR 1162439
(43) Date de publication de la demande: 29.10.2014
(73) Titulaire: Orange, 75015 Paris (FR)
(72) Inventeur: LE HUEROU, Emmanuel, F-22700 Saint Quay Perros (FR); BEAUFILS, Eric, F-22450 Langoat (FR)
(74) Mandataire: Cabinet Plasseraud
(86) Numéro de dépôt international: PCT/FR2012/052953
(87) Numéro de publication internationale: WO 2013/093314

(56) Documents cités:
- EP-A2- 1 054 545
- WO-A1-2010/136323

## Description

L'invention concerne de manière générale le domaine des télécommunications et plus précisément l'accès par divers terminaux de télécommunications à des données stockées par un serveur sur un réseau de télécommunications.

La présente invention s'applique notamment à un système dit « d'informatique en nuage » (de l'expression anglaise « *cloud computing* »), c'est-à-dire un système informatique qui permet aux particuliers de stocker leurs données personnelles sur des serveurs, mais également aux entreprises qui ne disposent pas de leurs propres serveurs de stocker leurs données sur des serveurs qu'elles louent ; ces dernières délèguent ainsi leurs opérations de calcul et de stockage à des prestataires bénéficiant d'infrastructures informatiques disséminées dans le monde entier et reliées entre elles par un réseau. L'accès à cette « informatique en nuage » se fait généralement *via* Internet, et dans ce contexte un utilisateur particulier ou d'entreprise accède à ses applications et ses données hébergées sur un serveur distant au travers d'un « bureau virtuel », *via* tout terminal connecté au réseau.

Ainsi de manière générale, l'utilisateur se connecte à un serveur ou plateforme de services dans laquelle est hébergée une base de données contenant ses données personnelles - par exemple, des photos, des vidéos, des documents, etc. - depuis un terminal informatique, tel qu'un ordinateur personnel, dans lequel est téléchargée une page web d'accès à un portail d'entrée de la plateforme de services, ou bien à partir d'une application logicielle préalablement installée dans le terminal informatique considérée. A titre d'exemples, de tels services de stockage de données informatiques en « nuage » sont proposés par des sociétés telles que Dropbox (*Dropbox*™, stockage et partage de fichiers en ligne) ou Google (*Picasa Web Album*™, gestion de photos sur le web).

Pour se connecter à son espace personnel sur le réseau, de manière classique l'utilisateur entre un identifiant d'utilisateur (*login*) et un mot de passe (*password*) à partir de son terminal connecté à un réseau de type IP (*Internet Protocol*). Après vérification de son identité par le serveur, l'utilisateur accède à son environnement de données personnelles. L'utilisateur peut ainsi se connecter à son environnement de données personnelles hébergé par la plateforme de services depuis divers terminaux informatiques connectés à l'internet de manière fixe (PC, par exemple) ou en mobilité (téléphone intelligent ou *smartphone,* tablette numérique, ...).

Dans ce contexte, chaque fois qu'il voudra changer de terminal informatique pour se connecter à son espace personnel, l'utilisateur devra recommencer depuis le nouveau terminal la procédure de connexion avec identifiant et mot de passe. Par ailleurs, si l'utilisateur précité veut donner accès à son environnement de données à un utilisateur tiers distant, muni de son propre terminal, il devra communiquer à cet utilisateur tiers ses données personnelles d'identification.

La présente invention vise à améliorer la situation exposée ci-dessus en permettant notamment à un utilisateur d'utiliser tout terminal connecté sur Internet pour accéder à des données personnelles stockées dans le « nuage » dans des conditions de sécurité et de confort d'usage améliorées.

La présente invention est définie par une première revendication indépendante de procédé (revendication 1), une deuxième revendication indépendante de terminal (revendication 10), une troisième revendication indépendante de serveur (revendication 13) et une quatrième revendication indépendante de module logiciel (revendication 15) concernant un accès facile et sécurisé à des données stockées dans un réseau de communications.

A cet effet, selon un premier aspect, la présente invention concerne un procédé d'accès par un premier terminal de télécommunication à une base de données hébergée par une plateforme de services accessible via un réseau de télécommunications. Conformément à l'invention ce procédé comporte de manière générale :
(A)- la transmission d'une information représentative d'une requête d'accès du premier terminal à la base de données, à destination d'un second terminal associé à un identifiant d'abonné à un second réseau de télécommunications, ledit identifiant d'abonné correspondant au second terminal;
(B)- dans le second terminal, l'envoi d'une réponse à la requête d'accès à destination d'un serveur d'authentification de la plateforme, ladite réponse comprenant un identifiant du premier terminal (T1) et l'identifiant d'abonné du second terminal (T2);
(C)- dans le serveur d'authentification, lorsqu'une réponse à la requête d'accès est reçue, la vérification de l'identifiant de l'abonné au second réseau, et la validation ou non de l'accès à la base de données par le premier terminal en fonction du résultat de la vérification précitée.

Selon le procédé de l'invention, défini ci-dessus en termes généraux, l'accès du premier terminal à la base de données de la plateforme de services est conditionné par l'autorisation reçue en provenance d'un second terminal de télécommunications, par exemple un *smartphone,* dont l'identifiant d'abonné - en pratique le numéro de téléphone (numéro MSISDN) stocké dans la carte SIM du téléphone, lorsque ce second téléphone est un terminal de téléphonie mobile -, est authentifié par le serveur d'authentification.

En pratique, lorsque le second terminal est un téléphone mobile, l'utilisateur du second terminal propriétaire des données personnelles stockées sur le réseau, peut ainsi autoriser rapidement et simplement l'accès à ses données personnelles à un autre terminal avec son téléphone mobile. En effet, le numéro MSISDN (*Mobile Station ISDN Number*) stocké dans la carte SIM (*Subscriber Identity Module*) du téléphone mobile est déductible de la réponse à la requête d'accès, puis est authentifié dans le serveur, ce qui permet de garantir de manière fiable l'origine de la réponse à la requête d'accès.

Selon un mode de réalisation particulier de l'invention, les premier et second terminaux de télécommunication sont connectés au même réseau de communication. Dans ce cas le réseau de communication d'accès à la plateforme de service et le second réseau de communication précité sont un même et unique réseau. Par exemple, les premier et second terminaux peuvent être tous les deux des terminaux mobiles connectés au même réseau de téléphonie mobile.

Selon un premier mode de réalisation de l'invention, l'étape (A) du procédé précité comprend :
(a1) - dans le premier terminal de télécommunication, génération d'une requête d'accès à la base de données, la requête incluant une information d'identification de l'abonné au second réseau de télécommunications, et envoi de la requête d'accès au serveur d'authentification de la plateforme ;
(a2) - dans le serveur d'authentification, détermination du second terminal de télécommunication à partir de l'information d'identification d'abonné extraite de la requête d'accès reçue, puis transmission au second terminal d'une demande d'autorisation d'accès du premier terminal à la base de données.

Dans ce mode de réalisation, c'est le serveur d'authentification qui détermine le second terminal (le terminal mobile) à partir de l'information d'identification d'abonné. Selon un caractéristique particulière de ce mode de réalisation, l'étape (A) inclut une opération préalable de chargement et d'affichage dans le premier terminal d'une page web d'accès au serveur d'authentification de la plateforme de services, la requête d'accès au serveur d'authentification faisant suite à une commande de l'utilisateur du premier terminal transmise via ladite page web.

Par exemple, la commande de l'utilisateur du premier terminal peut être simplement la saisie sur le clavier du premier terminal, du numéro de téléphone de l'utilisateur du second terminal. Il n'est donc pas nécessaire que le premier utilisateur saisisse un identifiant et un mot de passe comme c'est le cas dans la plupart des applications connues de l'état de la technique.

Selon une autre caractéristique de l'invention, l'étape (B) susmentionnée du procédé d'accès selon l'invention comprend :
(b1) - notification de la demande d'autorisation d'accès dans le second terminal ; et
(b2) - suite à une action d'un utilisateur du second terminal effectuée au moyen d'une interface homme-machine du second terminal, envoi d'une réponse à la demande d'autorisation d'accès à destination du serveur d'authentification.

Ainsi, comme exposé ci-dessus, dans ce premier mode de réalisation, c'est le serveur d'authentification qui fait office d'intermédiaire entre l'utilisateur du premier terminal et celui du second terminal, propriétaire des données auxquelles le premier utilisateur veut accéder. Ce mode de réalisation est ainsi particulièrement adapté à la situation dans laquelle les premier et second utilisateurs sont distants l'un de l'autre. Dans ce contexte, l'accès à la base de données par le premier terminal permet par exemple de réaliser une application de partage de données de la base de données, dont la mise en oeuvre est validée par l'utilisateur du second terminal à la demande de l'utilisateur du premier terminal.

Selon une caractéristique de réalisation, toujours dans le mode de réalisation exposé ci-dessus, le procédé selon l'invention comprend l'affichage dans le second terminal d'une interface graphique affichant des informations relatives aux demandes d'accès et à l'état de connexion avec la plateforme de services pour un ensemble de terminaux de télécommunications prédéterminé.

Grâce à cette disposition, l'utilisateur du second terminal dispose d'un moyen efficace et simple à utiliser pour délivrer puis contrôler l'accès, par des utilisateurs tiers, à des données de son espace de données personnelles dans la plateforme de services.

Selon un mode de réalisation particulier, pour un ensemble prédéterminé de premiers terminaux identifiés dans une liste stockée dans le second terminal, une réponse à la requête d'accès reçue est automatiquement envoyée par le second terminal à destination du serveur d'authentification. Par exemple, cette réponse pourra être envoyée automatiquement après une durée prédéterminée (temporisation) sans intervention de l'utilisateur.

Ainsi, le second terminal transmet automatiquement une réponse au serveur d'authentification sans intervention de l'utilisateur du second terminal, pour un terminal considéré de la liste. Par exemple, si le second terminal est une téléphone mobile et le premier terminal une tablette numérique appartenant à un même utilisateur, ce dernier est ainsi dispensé de l'étape de validation par envoi d'une réponse au serveur d'authentification, lorsque la tablette est identifiée dans la liste.

Selon une variante de réalisation, la liste précitée de premiers terminaux est stockée dans le serveur d'authentification, l'étape (a2) de transmission au second terminal d'une demande d'autorisation d'accès du premier terminal à la base de données n'est alors pas mise en oeuvre lorsque le premier terminal est identifié comme étant un terminal de la liste, l'accès du premier terminal à la base de données étant automatiquement validé par le serveur d'authentification.

Selon un second mode de réalisation du procédé de l'invention, qui peut être avantageusement combiné avec le premier mode de réalisation exposé ci-dessus, le procédé comprend une opération préalable de chargement et d'affichage dans le premier terminal d'une page web d'accès au serveur d'authentification de la plateforme, et dans lequel la page web d'accès au serveur d'authentification de la plateforme de services, affichée sur un écran du premier terminal, représente un code à deux dimensions généré automatiquement par le serveur d'authentification lors du téléchargement de la page web ; l'étape (A) de transmission d'une information représentative d'une requête d'accès à la base de données du premier terminal au second terminal, consiste alors à transmettre ce code à deux dimensions à une application logicielle installée dans le second terminal.

En particulier, dans ce mode de réalisation, à l'étape (B), la réponse à la requête d'accès envoyée du second terminal à destination du serveur d'authentification inclut le code à deux dimensions précité. Le serveur d'authentification compare alors le code reçu avec le code généré initialement.

Selon un mode de réalisation préférentiel, le second réseau de télécommunications est un réseau de téléphonie mobile, et le second terminal est un téléphone mobile de type *smartphone.*

Dans ce second mode de réalisation, la transmission de la requête d'accès a lieu directement du premier terminal vers le second terminal, par exemple par photographie par le second terminal du code affiché à l'écran du premier terminal. On comprendra alors que ce mode de réalisation est particulièrement adapté à la situation dans laquelle les deux terminaux sont situés à proximité l'un de l'autre, par exemple dans la même pièce. Dans ce contexte, l'accès à la base de données par le premier terminal permet par exemple de réaliser une application de déport d'affichage de données, du second terminal vers le premier terminal, dans le cas par exemple où ce dernier dispose de capacités d'affichage plus étendues que celles du second terminal. Bien sûr, selon ce second mode de réalisation, l'utilisateur du premier terminal et celui du second terminal peuvent être les mêmes personnes.

Selon un second aspect, la présente invention a pour objet un terminal de télécommunication comprenant :
- des moyens de réception d'une information représentative d'une requête d'accès d'un premier terminal de télécommunication à une base de données hébergée par une plateforme de services sur un réseau de télécommunications ;
- des moyens de génération et d'envoi d'une réponse à la requête d'accès à destination d'un serveur d'authentification de la plateforme de services afin de vérifier un identifiant d'abonné à un second réseau de télécommunications, ledit identifiant d'abonné correspondant au second terminal, auquel est connecté ledit terminal de télécommunication, ladite réponse comprenant un identifiant du premier terminal (T1) et l'identifiant d'abonné du second terminal (T2), et de valider l'accès à la base de données par le premier terminal en fonction du résultat de la vérification de l'identifiant d'abonné.

Selon une caractéristique particulière, un tel terminal de télécommunications selon l'invention comporte en outre des moyens d'interface homme-machine adaptés à notifier à un utilisateur du terminal l'information précitée représentative de la requête d'accès, et à envoyer une réponse à la requête d'accès à destination d'un serveur d'authentification, suite à une action de l'utilisateur effectuée via l'interface homme-machine.

Selon une autre caractéristique d'un tel terminal de télécommunications, celui-ci comporte des moyens d'interface graphique adaptés à afficher des informations relatives aux requêtes d'accès et à l'état de connexion avec la plateforme de services pour un ensemble de terminaux de télécommunications prédéfini.

Ainsi l'utilisateur d'un (second) terminal selon l'invention, « propriétaire » des données, pourra avantageusement garder le contrôle des connexions en cours avec la base de données pour un ensemble prédéfini de terminaux d'utilisateurs. En particulier, l'utilisateur du terminal selon l'invention aura, via l'interface graphique, la possibilité d'interrompre une connexion en cours entre un premier terminal parmi l'ensemble de terminaux prédéfini, et la base de données.

Selon un mode particulier de réalisation un tel terminal de télécommunication comporte des moyens de réception et de lecture d'un code à deux dimensions transmis par le premier terminal, ce code étant représentatif d'une requête d'accès à la base de données par le premier terminal. Dans ce mode de réalisation, la réponse à la requête d'accès à destination d'un serveur d'authentification inclut le code à deux dimensions.

Selon un troisième aspect, la présente invention a pour objet un serveur d'authentification pour la mise en oeuvre d'un procédé d'accès à une base de données, tel que brièvement exposé ci-dessus, ce serveur comprenant :
- des moyens de réception d'une réponse à une requête d'accès d'un premier terminal de télécommunication à la base de données, en provenance d'un second terminal de téléphonie mobile selon l'invention, ladite réponse comprenant un identifiant du premier terminal (T1) et un identifiant d'abonné du second terminal (T2); et
- des moyens de vérification de l' identifiant d'abonné à un réseau de téléphonie mobile correspondant au second terminal suite à la réception de la réponse à une requête d'accès, et de validation de l'accès à la base de données par le premier terminal en fonction du résultat de ladite vérification.

On comprendra qu'un tel serveur est particulièrement adapté à un procédé d'accès à une base de données, tel que brièvement exposé plus haut dans le contexte du premier mode de réalisation.

En outre, un tel serveur selon l'invention comporte :
- des moyens de réception d'une requête d'accès à la base de données en provenance du premier terminal, la requête incluant une information d'identification d'un abonné à un réseau de téléphonie mobile ;
- des moyens de détermination d'un second terminal de télécommunication à partir de l'information d'identification d'abonné extraite de la requête d'accès reçue ; et,
- des moyens de transmission au second terminal d'une demande d'autorisation d'accès du premier terminal à la base de données.

Enfin, selon un dernier aspect, l'invention a pour objet un module logiciel destiné à être incorporé dans un terminal de télécommunications selon l'invention, tel que brièvement exposé plus haut, ou bien destiné à être incorporé dans un serveur d'authentification selon l'invention, tel que brièvement exposé plus haut. Un tel module logiciel comporte des instructions de programme dont l'exécution par un processeur informatique permet de mettre en oeuvre les étapes d'un procédé d'accès à une base de données, selon l'invention, qui sont exécutées, selon le cas considéré, dans un terminal de télécommunications selon l'invention ou bien dans un serveur d'authentification selon l'invention.

Par ailleurs, un tel module logiciel peut utiliser n'importe quel langage de programmation, et comprendre des programmes sous forme de code source, code objet, ou de code intermédiaire entre code source et code objet, tel que dans une forme partiellement compilée, ou dans n'importe quelle autre forme souhaitable.

L'invention vise aussi par conséquent un support d'enregistrement d'informations lisible par un ordinateur, et comportant des instructions de programme d'ordinateur. Un tel support d'enregistrement peut être constitué par n'importe quelle entité ou dispositif capable de stocker un tel programme. Par exemple, le support peut comporter un moyen de stockage, tel qu'une ROM, par exemple un CD ROM ou une ROM de circuit microélectronique, ou encore un moyen d'enregistrement amovible tel qu'une clé USB ou un moyen d'enregistrement magnétique, tel qu'un disque dur. D'autre part, un module logiciel selon l'invention peut être en particulier téléchargé sur un réseau de type Internet.

Les avantages procurés par un terminal de télécommunications, un serveur d'authentification, un module logiciel, tels que brièvement définis plus haut, sont identiques ou contribuent à ceux mentionnés plus haut en relation avec le procédé de d'accès à une base de données, selon l'invention, et ne seront par conséquent pas rappelés ici.

D'autres caractéristiques et avantages de la présente invention ressortiront de la description détaillée qui suit, laquelle fait référence aux dessins annexés dans lesquels :
- la figure 1 illustre un système de télécommunications dans lequel l'invention est mise en oeuvre, et en particulier illustre les éléments fonctionnels incorporés respectivement dans un terminal de télécommunication et dans un serveur d'authentification, selon l'invention ;
- la figure 2 représente sous forme d'organigramme les principales étapes d'un procédé d'accès par un terminal de télécommunications à une base de données hébergée par une plateforme de services, selon l'invention ; et
- la figure 3 illustre un exemple d'échanges de messages entre les différents éléments du système de télécommunications de la figure 1, pour la mise en oeuvre d'un procédé d'accès à une base de données, selon l'invention.

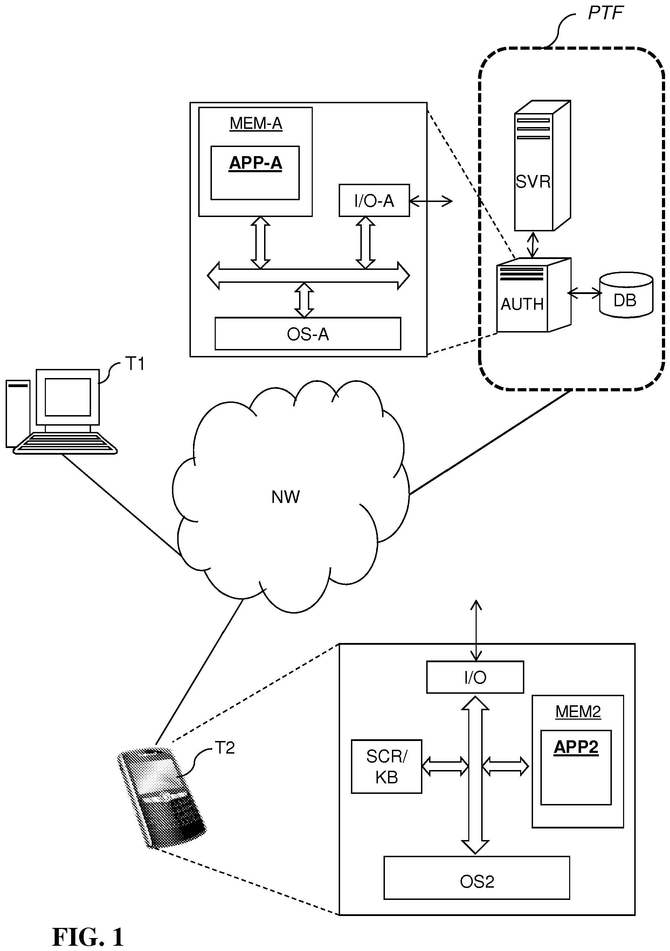

La **figure 1** illustre un système de télécommunications dans lequel l'invention est mise en oeuvre. Comme représenté sur la figure 1, un premier terminal de télécommunication T1 est connecté au réseau de télécommunications NW constitué ici d'un réseau IP de type Internet. Le terminal T1 dans cet exemple de réalisation est ordinateur personnel, mais il peut s'agir d'une tablette numérique ou tactile, ou encore d'un *smartphone* connecté à Internet.

Le système comprend aussi une plateforme de services PTF connectée au réseau NW, et qui offre divers services tels que le stockage de données personnelles « dans le nuage » (*cloud storage*) - par exemple des documents multimédias tels que des vidéos, photos, des documents textuels, etc. La plateforme de services PTF comprend un serveur d'authentification AUTH associé à une base de données DB d'utilisateurs des services, et un serveur SVR de données stockant les données personnelles des utilisateurs inscrits au service de stockage de données personnelles.

La base de données d'utilisateurs (DB), associée au serveur d'authentification, contient pour chaque utilisateur de la plateforme de services, une liste ou un tableau mémorisé contenant un identifiant d'utilisateur ou abonné au service de stockage de données - par exemple un nom d'utilisateur - associé à au moins un identifiant d'abonné à un réseau de téléphonie ou un identifiant de terminal, par exemple un numéro de téléphone mobile, un numéro de téléphone IP fixe, une adresse IP. En outre, un tel tableau d'utilisateur peut avantageusement comprendre un autre identifiant de communication, tel qu'une adresse email. Ainsi, l'utilisateur d'un terminal T1, pourra utiliser une adresse email comme identifiant d'utilisateur pour permettre au serveur d'authentification d'identifier un utilisateur inscrit dans la base de données d'utilisateurs (DB) et déterminer ensuite un terminal (T2) associé à l'utilisateur identifié.

Le système représenté comprend également un second terminal de télécommunication, T2, connecté au réseau NW. Dans l'exemple de réalisation décrit et illustré, le terminal T2 est un terminal de téléphonie mobile de type *smartphone.* Le téléphone mobile T2 est représenté sur la figure 1 connecté au réseau NW pour simplifier l'exposé. Cependant, le terminal T2 peut en pratique être relié au réseau NW au travers d'un réseau d'accès, par exemple un réseau WiFi, ou bien au travers d'un réseau mobile de troisième génération (UMTS) (connexion en mode *data*).

Comme représenté à la figure 1, le terminal mobile T2 inclut notamment les modules fonctionnels suivants :
- Un module de communication d'entrée/sortie, noté « I/O » et destiné à communiquer avec le réseau NW.
- Un module système d'exploitation, OS2, par exemple le système d'exploitation Android™ de la société Google, gérant l'interaction entre les différents modules et le processeur (non représenté) du terminal T2.
- Un dispositif d'affichage associé à un clavier (tactile ou mécanique) « SCR/KB ».
- Un module mémoire MEM2 dans lequel est stockée une application ou module logiciel APP2 selon l'invention.

Le module I/O permet en particulier de recevoir une information représentative d'une requête d'accès du premier terminal de télécommunication T1 aux données personnelles de l'utilisateur du terminal T2 stockées dans le serveur SVR de la plateforme de services PTF, puis de communiquer cette information à l'application APP2.

L'application APP2 inclut des instructions de programme adaptées à générer une réponse à la requête d'accès, transmise ensuite au module I/O qui à son tour la transmet à destination du serveur d'authentification AUTH, au travers du réseau NW.

L'application APP2 du terminal T2 inclut aussi des instructions dont l'exécution produit une interface homme-machine - en pratique une interface graphique affichée par l'écran SCR du terminal -, via laquelle l'utilisateur du terminal T2 reçoit notification d'une information représentative de la requête d'accès, et lui permet d'envoyer une réponse à la requête d'accès à destination du serveur d'authentification.

Dans le mode de réalisation présenté, l'interface graphique produite par l'application APP2 est adaptée à afficher des informations relatives aux requêtes d'accès et à l'état de connexion avec la plateforme de services PTF pour un ensemble de terminaux de télécommunications prédéterminé. Cet ensemble de terminaux peut inclure d'autres terminaux de l'utilisateur principal du terminal T2 (un terminal mobile dans le mode de réalisation illustré), comme par exemple une tablette numérique ou un PC de maison, ou bien des terminaux de télécommunications appartenant à des personnes choisies par l'utilisateur du terminal T2 (par exemple des amis ou des personnes de sa famille).

Selon un mode particulier de réalisation, le terminal T2 comprend en outre un module de lecture d'un code à deux dimensions, intégré ou associé à l'application APP2, et permettant notamment de lire un code à deux dimensions transmis par le premier terminal T1, lequel code étant représentatif d'une requête d'accès à la base de données par le terminal T1.

Dans ce mode de réalisation, une réponse à une requête d'accès transmise par le terminal T2 à destination du serveur d'authentification inclut un tel code à deux dimensions, le serveur d'authentification comparant ensuite le code reçu avec le code généré initialement. En pratique un tel code à deux dimensions peut être constitué d'un code barre à deux dimensions tel qu'un QR code.

Selon une variante de réalisation un terminal T2 selon l'invention peut être équipé d'un lecteur d'étiquette (*tag* en anglais) NFC destiné à lire une étiquette NFC (*Near Field Communication*) équipant et programmée par le terminal T1.

Toujours à la figure 1, le serveur d'authentification AUTH de la plateforme de services PTF comporte corrélativement les modules fonctionnels suivants :
- Un module de communication d'entrée/sortie, noté « I/O-A » et destiné à communiquer avec le réseau NW et recevoir une requête d'accès à la base de données en provenance du premier terminal T1, cette requête d'accès incluant une information d'identification d'un utilisateur inscrit aux services fournis par la plateforme de services PTF. Dans le mode de réalisation décrit, cette information d'identification d'utilisateur est une information d'identification d'un abonné à un second réseau de télécommunications - ici un réseau de téléphonie mobile, l'information d'identification étant par exemple le numéro de téléphone associé à la carte SIM incorporée dans le terminal T2. Le module I/O-A est chargé également de transmettre au second terminal T2, identifié grâce à l'information d'identification précitée, une demande d'autorisation d'accès du premier terminal T1.
- Un module système d'exploitation, OS-A, gérant l'interaction entre les différents modules et le processeur (non représenté) du serveur.
- Un module mémoire MEM-A dans lequel est stockée une application ou module logiciel APP-A selon l'invention, dont les instructions de programme lorsqu'elles sont exécutées par un processeur (non représenté) du serveur AUTH permettent de mettre en oeuvre les étapes du procédé d'accès selon l'invention qui sont mises en oeuvre dans le serveur d'authentification. En particulier, le module logiciel APP-A est conçu pour vérifier un identifiant d'un second terminal T2 - c'est-à-dire, dans le mode de réalisation décrit, un identifiant d'abonné (numéro de téléphone) d'un réseau de téléphonie mobile -, suite à la réception d'une réponse à une requête d'accès, en provenance du terminal T2 ; et d'autre part, pour valider ou non l'accès à la base de données (SVR) par le premier terminal T1 en fonction du résultat de la vérification précitée.

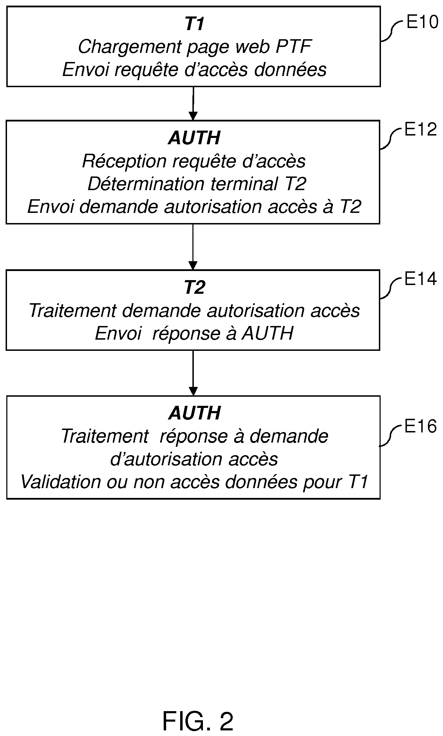

La **figure 2** représente sous forme d'organigramme les principales étapes du procédé d'accès par un terminal de télécommunications T1 à une base de données SVR hébergée par une plateforme de services PTF.

Comme représenté sur la figure 2, le procédé selon l'invention commence par l'étape E10 au cours de laquelle le terminal T1, connecté au réseau Internet, charge une page web d'accès au serveur d'authentification AUTH de la plateforme de services, par exemple une adresse du type « *cloudphone.orange.fr* ». L'utilisateur du terminal T1 connaît au moins un identifiant de communication permettant d'identifier le propriétaire des données qu'il désire consulter, par exemple un album photos. Cet identifiant de communication peut être une adresse email, un numéro de téléphone fixe, un numéro de téléphone mobile ou bien un nom de personne.

L'utilisateur du terminal T1 saisit à l'écran du terminal cet identifiant, dans un champ dédié de la page web. Supposons que cet identifiant soit une adresse email, une requête d'accès aux données est alors générée, celle-ci inclut l'information d'identification constituée de l'adresse email du propriétaire des données. La requête d'accès est alors envoyée au serveur d'authentification AUTH.

A l'étape E12 qui suit, le serveur d'authentification reçoit la requête d'accès en provenance du terminal T1, extrait l'information d'identification d'une personne, dans cet exemple une adresse email, et consulte la base de données d'utilisateurs DB avec comme paramètre d'entrée cette adresse email, pour obtenir au moins un identifiant d'abonné à un réseau de communications. Dans cet exemple, le serveur AUTH obtient un numéro de téléphone mobile. Le serveur d'authentification transmets alors au terminal mobile T2 qui correspond au numéro de téléphone mobile obtenu, une demande d'autorisation d'accès représentative de la requête d'accès du premier terminal aux données personnelles de la personne identifiée par le numéro de téléphone mobile précité, dans la base de données d'utilisateurs DB de la plateforme de services PTF.

A l'étape suivante, E14, dans le terminal mobile T2, la demande d'autorisation d'accès est reçue par l'application APP2 et notifiée à l'utilisateur du terminal, par exemple par une sonnerie spécifique. Selon des variantes de réalisation, la notification au terminal T2 de la demande d'autorisation d'accès peut être effectuée par l'envoi d'un message de type SMS ou MMS, ou bien par un appel téléphonique déclenché automatiquement par un serveur vocal interactif commandé par le serveur d'authentification. Une fois la demande d'autorisation d'accès notifiée à l'utilisateur du second terminal, celui-ci peut alors déclencher, via l'interface graphique affichée par l'application APP2 du terminal T2, l'envoi d'une réponse à la demande d'autorisation d'accès, à destination du serveur d'authentification AUTH.

Comme exposé plus haut dans la description, selon un mode de réalisation avantageux de l'invention, le propriétaire des données à partager et utilisateur du terminal T2 a la possibilité de prédéfinir une liste de terminaux T1, stockée dans le terminal T2 ou accessible sur le réseau par l'application APP2 du terminal T2, pour lesquels une réponse favorable à la requête d'accès reçue est automatiquement envoyée par le second terminal à destination du serveur d'authentification. Selon une variante de réalisation qui peut être combinée avec la précédente, une telle liste prédéfinie de terminaux peut être stockée dans le serveur d'authentification, dans ce cas l'étape de transmission au terminal T2 d'une demande d'autorisation d'accès n'est pas mise en oeuvre pour les terminaux identifiés dans la liste précitée.

A l'étape E16, lorsque le serveur d'authentification AUTH reçoit une réponse à la demande d'autorisation en provenance du terminal T2, il analyse la réponse et valide ou non de l'accès à la base de données par le premier terminal en fonction du contenu de la réponse.

Si l'accès est validé, une session de consultation de données est établie entre le terminal T1 et le serveur de données SVR. L'application APP2 du second terminal T2 affiche une interface graphique présentant l'état de la session de consultation entre le terminal T1 et le serveur de données SVR, et l'utilisateur du terminal T2 a ainsi la possibilité de contrôler la session en cours.

Dans le second mode de réalisation présenté plus haut dans la description, dans le terminal T1, la page web d'accès au serveur d'authentification de la plateforme de services provoque l'affichage d'un code à deux dimensions généré automatiquement par le serveur d'authentification lors du téléchargement de la page web. L'étape E12 de la figure 2 est par conséquent « court-circuitée » puisque le code à deux dimensions est transmis directement du premier terminal T1 au second terminal T2, par exemple par photographie du code par le terminal T2. Dans ce cas, la réponse à la demande d'autorisation d'accès, générée par le terminal T2 à l'étape E14, inclut le code photographié.

En pratique, dans les modes de réalisation exposés ici, les échanges entre les terminaux T1 et T2 et le serveur AUTH sont mis en oeuvre par des commandes utilisant le langage connu XML (*Extensible Markup Language*) et transmises selon le protocole de communication connu HTTP (*HyperText Transfer Protocol*).

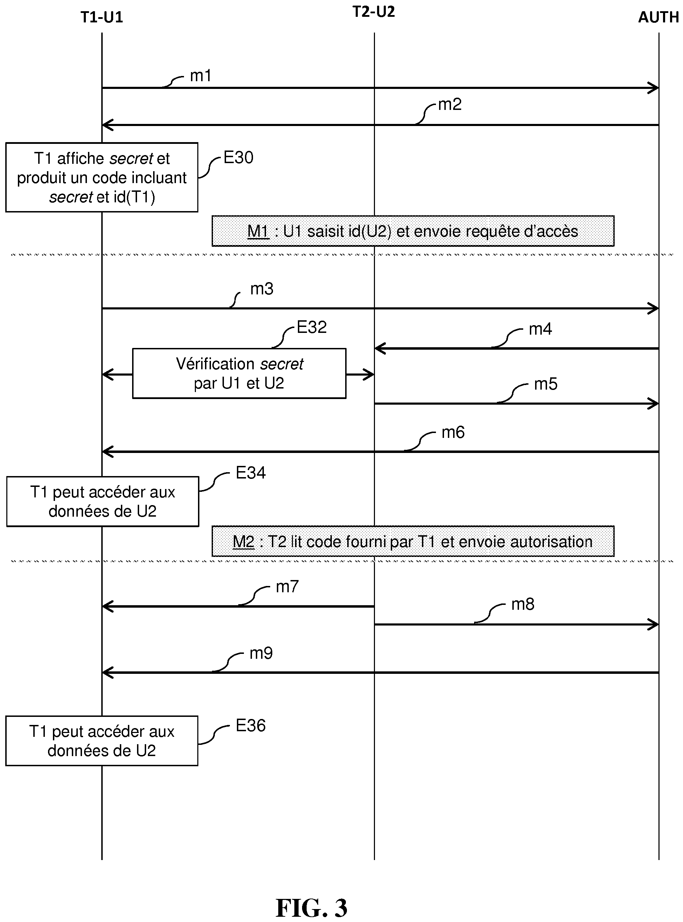

La **figure 3** illustre un exemple d'échanges de messages entre les différents éléments du système de télécommunications de la figure 1, pour la mise en oeuvre d'un procédé d'accès à une base de données, selon les premier et second modes de réalisation de l'invention. A la figure 3, les références « T1-U1 », « T2-U2 » et AUTH et les lignes verticales correspondantes, indiquent les actions mises en oeuvre respectivement dans le terminal T1 dont l'utilisateur est U1, le terminal T2 dont l'utilisateur est U2, et dans le serveur d'authentification AUTH. La figure 3 illustre ainsi un exemple de processus d'accès par un utilisateur U1 du terminal T1 à des données personnelles, stockées dans la plateforme de services (PTF), d'un utilisateur U2 du terminal T2.

Le processus commence par l'envoi d'un message m1 du terminal T1 vers le serveur AUTH, ce message m1 contient une requête d'un code secret du terminal T1 vers le serveur AUTH, de la forme *getSecret(T1)* par exemple. En retour le serveur AUTH transmet au terminal T1 un message m2 contenant un code secret généré de manière aléatoire dans le serveur. Le message m2 contient une commande par exemple de la forme *setSecret(secret)* où *secret* est le code secret. L'échange préalable d'un code secret entre les serveur AUTH et le terminal T1 permet ainsi de sécuriser davantage le procédé d'accès selon l'invention.

Ensuite, comme représenté en E30, le terminal T1 ayant reçu le code secret, ce dernier est affiché sur le terminal T1 et parallèlement, un élément, lisible par un dispositif extérieur, contenant le code secret et un identifiant du terminal T1 (par exemple son adresse IP), est produit dans le terminal T1. Cet élément « lisible » est par exemple un code-barre tel qu'un *QR code* ou étiquette NFC. Deux cas sont alors à considérer, le cas « M1 » correspondant au premier mode de réalisation exposé plus haut, ou le cas « M2 » correspondant au second mode de réalisation exposé plus haut.

Selon le premier mode de réalisation (M1), l'utilisateur U1 du premier terminal T1 déclenche, via la page web d'accès au serveur AUTH, la transmission d'un message m3 contenant la requête d'accès aux données, à destination du serveur AUTH, la requête d'accès incluant un identifiant de l'utilisateur U2 (par exemple un numéro de téléphone mobile). Le message m3 contient une commande par exemple de la forme *getAccess(T1, U2, secret).*

Suite à la réception du message m3, le serveur AUTH détermine le terminal T2 et lui envoie un message m4 contenant une demande d'autorisation d'accès du terminal T1 à des données personnelles de l'utilisateur U1. Ce message m4 contient une commande par exemple de la forme *getAccess(T1, secret).*

Suite à la réception du message m4 dans le terminal T2, selon l'exemple d'échanges exposé, comme représenté par la boîte E32, l'utilisateur U2 ayant reçu le code *secret* (par exemple un code à quatre chiffres) entre en contact avec l'utilisateur U1 pour vérifier que l'utilisateur U1 est en possession du code secret, et que par conséquent la requête d'accès en provenance du terminal T1 est bien authentique. Cette mise en contact de l'utilisateur U2 avec l'utilisateur U1 peut être réalisée par communication vocale, par exemple lorsque les terminaux T1 et T2 sont géographiquement distants l'un de l'autre, ou bien par une communication orale lorsque les terminaux sont proches l'un de l'autre (dans une même pièce par exemple), et les utilisateurs U1 et U2 sont distincts.

L'opération optionnelle ci-dessus de vérification du code secret permet de garantir notamment que la requête d'accès n'a pas été envoyée par un pirate informatique qui aurait usurpé l'identité du terminal T1.

Si le terminal T1 est bien authentifié par l'utilisateur T1, l'utilisateur U1 déclenche dans le terminal T1 l'envoi à destination du serveur AUTH d'un message m5 contenant une réponse favorable à la demande d'autorisation contenue dans le message m4, par exemple une commande de la forme *setAutorisation(T1, U2, secret).*

En réponse, le serveur AUTH envoie un message m6 au terminal T1, le message m6 contenant une clé numérique d'autorisation permettant au terminal T1 de déverrouiller l'accès aux données que l'utilisateur U1 désire consulter et qui sont stockées dans le serveur de données SVR de la plateforme de services PTF. Le message m6 contient une commande qui est par exemple de la forme *setAutorisation(autorisationKey).* Le terminal T1 ayant reçu la clé d'autorisation ou jeton (*token* en anglais), l'accès par le terminal T1 aux données de l'utilisateur U2 est dès lors autorisé (boîte E34) sous réserve de la soumission par le terminal T1 du jeton au serveur d'authentification AUTH ; l'utilisateur U1 pourra alors consulter les données personnelles de l'utilisateur U2.

Toujours à la figure 3, selon le second mode de réalisation (M2) de l'invention, exposé plus haut, suite au téléchargement de la page web d'accès à la plateforme de services, un élément lisible contenant le code secret et l'identifiant du terminal T1 est produit dans le terminal T1 sous la forme par exemple d'un code-barres ou d'une étiquette (*tag*) NFC programmée dans le terminal T1. Dans ce mode de réalisation le terminal T2 se trouvant à proximité du terminal T1 et disposant d'un dispositif de lecture adapté lit le code secret fourni par le terminal T1 (représenté par la flèche m7). Suite à la lecture du code secret, l'application informatique APP2, selon l'invention, qui équipe le terminal T2, transmet alors automatiquement au serveur d'authentification AUTH le message m8, lequel contient une réponse favorable à la demande d'autorisation obtenue par lecture (flèche m7) par le terminal T2 de l'élément « lisible » précité, produit dans le terminal T1. Le message m8 contient une commande de la forme par exemple *setAutorisation(T1, U2, secret).*

Enfin, de même que pour le premier mode de fonctionnement, en réponse au message m8, le serveur AUTH envoie un message m9 au terminal T1, le message m9 contenant une clé numérique d'autorisation permettant au terminal T1 de déverrouiller l'accès aux données que l'utilisateur U1 désire consulter et qui sont stockées dans le serveur de données SVR de la plateforme de services PTF. Le message m9 contient une commande par exemple de la forme *setAutorisation(autorisationKey).* Le terminal T1 ayant reçu le jeton d'autorisation, l'accès par le terminal T1 aux données de l'utilisateur U2 est dès lors possible (boîte E36) sous réserve de la soumission par le terminal T1 du jeton d'autorisation au serveur AUTH, l'utilisateur U1 pourra alors consulter les données personnelles de l'utilisateur U2.

## Revendications

1. **Procédé** d'accès par un premier terminal de télécommunication (T1) à une base de données (SVR) hébergée par une plateforme de services (PTF) accessible via un réseau de télécommunications (NW), comprenant :
(A)- la transmission (E10, E12) d'une information représentative d'une requête d'accès du premier terminal à la base de données, à destination d'un second terminal (T2) associé à un identifiant d'abonné à un second réseau de télécommunications, ledit identifiant d'abonné correspondant au second terminal ;
(B)- dans le second terminal (T2), l'envoi (E14) d'une réponse à ladite requête d'accès à destination d'un serveur d'authentification (AUTH) de ladite plateforme, ladite réponse comprenant un identifiant du premier terminal (T1) et l'identifiant d'abonné du second terminal (T2) ;
(C)- dans le serveur d'authentification (AUTH), lorsqu'une réponse à la requête d'accès est reçue, la vérification (E16) de l'identifiant de l'abonné audit second réseau, et la validation (E16) ou non de l'accès à la base de données par le premier terminal en fonction du résultat de ladite vérification.

2. Procédé selon la revendication 1, dans lequel l'étape (A) comprend :
(a1) - dans le premier terminal (T1) de télécommunication, génération (E10) d'une requête d'accès à la base de données, ladite requête incluant une information d'identification dudit abonné au second réseau de télécommunications, et envoi de la requête d'accès au serveur d'authentification de la plateforme ;
(a2) - dans le serveur d'authentification (AUTH), détermination (E12) du second terminal de télécommunication à partir de ladite information d'identification d'abonné extraite de la requête d'accès reçue, puis transmission (E12) au second terminal (T2) d'une demande d'autorisation d'accès du premier terminal à la base de données.

3. Procédé selon la revendication 2, dans lequel l'étape (B) comprend :
(b1) - notification de la demande d'autorisation d'accès dans le second terminal ; et
(b2) - suite à une action d'un utilisateur du second terminal effectuée au moyen d'une interface homme-machine du second terminal, envoi d'une réponse à la demande d'autorisation d'accès à destination du serveur d'authentification.

4. Procédé selon la revendication 2 ou 3, dans lequel le réseau de télécommunications est un réseau de type Internet, et dans lequel l'étape (A) inclut une opération préalable de chargement et d'affichage dans le premier terminal d'une page web d'accès au serveur d'authentification de ladite plateforme, la requête d'accès au serveur d'authentification faisant suite à une commande de l'utilisateur du premier terminal transmise via ladite page web.

5. Procédé selon l'une quelconque des revendications 2 à 4, comprenant l'affichage dans le second terminal d'une interface graphique affichant des informations relatives aux demandes d'accès et à l'état de connexion avec la plateforme de services pour un ensemble de terminaux de télécommunications prédéterminé.

6. Procédé selon la revendication 2, dans lequel, pour une liste prédéterminée de premiers terminaux identifiés dans une liste stockée dans le second terminal, une réponse à la requête d'accès reçue est automatiquement envoyée par le second terminal à destination du serveur d'authentification.

7. Procédé selon la revendication 2, dans lequel, pour une liste prédéterminée de premiers terminaux identifiés dans une liste stockée dans le serveur d'authentification, l'étape (a2) de transmission au second terminal d'une demande d'autorisation d'accès du premier terminal à la base de données n'est pas mise en oeuvre lorsque ledit premier terminal est identifié comme étant un terminal de ladite liste, l'accès du premier terminal à la base de données étant automatiquement validé.

8. Procédé selon la revendication 1, comprenant une opération préalable de chargement et d'affichage dans le premier terminal d'une page web d'accès au serveur d'authentification de ladite plateforme, et dans lequel :
- ladite page web d'accès au serveur d'authentification de la plateforme de services, affichée sur un écran du premier terminal, représente un code à deux dimensions généré automatiquement par le serveur d'authentification lors du téléchargement de ladite page web ;
- l'étape (A) de transmission d'une information représentative d'une requête d'accès à ladite base de données du premier terminal au second terminal, consiste à transmettre ledit code à deux dimensions à une application logicielle installée dans le second terminal.

9. Procédé selon la revendication 8, dans lequel, à l'étape (B), la réponse à la requête d'accès envoyée du second terminal à destination du serveur d'authentification inclut ledit code à deux dimensions, le serveur d'authentification comparant ensuite le code reçu avec le code généré initialement.

10. **Terminal** de télécommunications (T2) comprenant :
- des moyens (I/O) de réception d'une information représentative d'une requête d'accès d'un premier terminal de télécommunication (T1) à une base de données hébergée par une plateforme de services (PTF) sur un réseau de télécommunications (NW) ;
- des moyens (APP2) de génération et d'envoi d'une réponse à ladite requête d'accès à destination d'un serveur d'authentification de ladite plateforme afin de vérifier un identifiant d'abonné à un second réseau de télécommunications, ledit identifiant d'abonné correspondant au second terminal, auquel est connecté ledit terminal de télécommunication, ladite réponse comprenant un identifiant du premier terminal (T1) et l'identifiant d'abonné du second terminal (T2), et de valider l'accès à la base de données par le premier terminal en fonction du résultat de ladite vérification.

11. Terminal selon la revendication 10, comportant en outre des moyens d'interface homme-machine adaptés à notifier à un utilisateur du terminal ladite information représentative de la requête d'accès, et à envoyer une réponse à la requête d'accès à destination d'un serveur d'authentification, suite à une action dudit utilisateur effectuée via l'interface homme-machine.

12. Terminal selon l'une des revendications 10 ou 11, comportant des moyens d'interface graphique adaptés à afficher des informations relatives aux requêtes d'accès et à l'état de connexion avec la plateforme de services pour un ensemble de terminaux de télécommunications prédéterminé.

13. Serveur d'authentification (AUTH) pour la mise en oeuvre d'un procédé d'accès à une base de données, conforme à l'une quelconque des revendications 1 à 9, ledit serveur comprenant :
- des moyens (l/O-A) de réception d'une réponse à une requête d'accès d'un premier terminal de télécommunication (T1) à ladite base de données, en provenance d'un second terminal télécommunication (T2), ladite réponse comprenant un identifiant du premier terminal (T1) et un identifiant d'abonné du second terminal (T2); et
- des moyens (APP-A) de vérification de l' identifiant d'abonné à un second réseau de télécommunications correspondant au second terminal suite à la réception de ladite réponse à une requête d'accès, et de validation de l'accès à la base de données par le premier terminal en fonction du résultat de ladite vérification.

14. Serveur selon la revendication 13, comportant en outre :
- des moyens de réception d'une requête d'accès à la base de données en provenance du premier terminal, ladite requête incluant une information d'identification d'un abonné à un second réseau de télécommunications ;
- des moyens de détermination d'un second terminal de télécommunication à partir de ladite information d'identification d'abonné extraite de la requête d'accès reçue ; et,
- des moyens de transmission au second terminal d'une demande d'autorisation d'accès du premier terminal à la base de données.

15. **Module logiciel** incorporé dans un terminal de télécommunication selon l'une quelconque des revendications 10 à 12, ou dans un serveur d'authentification selon la revendication 13 ou 14, ledit module logiciel comportant des instructions de programme dont l'exécution par un processeur informatique permet de mettre en oeuvre un procédé d'accès à une base de données, selon l'une quelconque des revendications 1 à 9.

## Patentansprüche

1. Verfahren für den Zugriff eines ersten Telekommunikationsendgeräts (T1) auf eine von einer über ein Telekommunikationsnetz (NW) zugänglichen Dienstplattform (PTF) gehostete Datenbank (SVR), umfassend:
(A)- das Übertragen (E10, E12) einer für eine Anforderung des Zugriffs des ersten Endgeräts auf die Datenbank repräsentativen Information an ein zweites Endgerät (T2), das einer Kennung eines Teilnehmers eines zweiten Telekommunikationsnetzes zugeordnet ist, wobei die Teilnehmerkennung dem zweiten Endgerät entspricht;
(B)- im zweiten Endgerät (T2) das Senden (E14) einer Antwort auf die Zugriffsanforderung an einen Authentifizierungsserver (AUTH) der Plattform, wobei die Antwort eine Kennung des ersten Endgeräts (T1) und die Teilnehmerkennung des zweiten Endgeräts (T2) umfasst;
(C)- im Authentifizierungsserver (AUTH), wenn eine Antwort auf die Zugriffsanforderung empfangen wird, das Überprüfen (E16) der Kennung des Teilnehmers des zweiten Netzes und das Freigeben (E16) oder Nichtfreigeben des Zugriffs auf die Datenbank durch das erste Endgerät in Abhängigkeit vom Ergebnis der Überprüfung.

2. Verfahren nach Anspruch 1, bei dem der Schritt (A) umfasst:
(a1) - im ersten Telekommunikationsendgerät (T1) das Generieren (E10) einer Anforderung des Zugriffs auf die Datenbank, wobei die Anforderung eine Information zur Identifizierung des Teilnehmers des zweiten Telekommunikationsnetzes beinhaltet, und Senden der Zugriffsanforderung an den Authentifizierungsserver der Plattform;
(a2) - im Authentifizierungsserver (AUTH) das Bestimmen (E12) des zweiten Telekommunikationsendgeräts ausgehend von der Information zur Identifizierung des Teilnehmers, die der empfangenen Zugriffsanforderung entnommen wurde, dann das Übertragen (E12) einer Anfrage zur Berechtigung des Zugriffs des ersten Endgeräts auf die Datenbank an das zweite Endgerät (T2).

3. Verfahren nach Anspruch 2, bei dem der Schritt (B) umfasst:
(b1) - Melden der Zugriffsberechtigungsanfrage im zweiten Endgerät; und
(b2) - nach einer Aktion eines Benutzers des zweiten Endgeräts, die über eine Mensch-Maschine-Schnittstelle des zweiten Endgeräts durchgeführt wird, Senden einer Antwort auf die Zugriffsberechtigungsanfrage an den Authentifizierungsserver.

4. Verfahren nach Anspruch 2 oder 3, wobei das Telekommunikationsnetz ein Netz von der Art des Internets ist und wobei der Schritt (A) einen vorherigen Vorgang des Ladens und Anzeigens einer Webseite für den Zugriff auf den Authentifizierungsserver der Plattform im ersten Endgerät beinhaltet, wobei die Anforderung des Zugriffs auf den Authentifizierungsserver nach einem Befehl des Benutzers des ersten Endgeräts erfolgt, der über diese Webseite übertragen wird.

5. Verfahren nach einem der Ansprüche 2 bis 4, umfassend das Anzeigen einer grafischen Schnittstelle im zweiten Endgerät, die Informationen zu den Zugriffsanfragen und zum Stand der Verbindung mit der Dienstplattform für eine vorbestimmte Gruppe von Telekommunikationsendgeräten anzeigt.

6. Verfahren nach Anspruch 2, bei dem für eine vorgegebene Liste von ersten Endgeräten, die in einer im zweiten Endgerät gespeicherten Liste identifiziert sind, vom zweiten Endgerät automatisch eine Antwort auf die empfangene Zugriffsanforderung an den Authentifizierungsserver gesendet wird.

7. Verfahren nach Anspruch 2, bei dem für eine vorgegebene Liste von ersten Endgeräten, die in einer im Authentifizierungsserver gespeicherten Liste identifiziert sind, der Schritt (a2) des Übertragens einer Anfrage zur Berechtigung des Zugriffs des ersten Endgeräts auf die Datenbank an das zweite Endgerät nicht durchgeführt wird, wenn das erste Endgerät als ein Endgerät der Liste identifiziert wird, wobei der Zugriff des ersten Endgeräts auf die Datenbank automatisch freigegeben wird.

8. Verfahren nach Anspruch 1, umfassend einen vorherigen Vorgang des Ladens und Anzeigens einer Webseite für den Zugriff auf den Authentifizierungsserver der Plattform in dem ersten Endgerät und bei dem:
- die Website für den Zugriff auf den Authentifizierungsserver der Dienstplattform, die auf einem Bildschirm des ersten Endgeräts angezeigt wird, einen zweidimensionalen Code darstellt, der vom Authentifizierungsserver beim Downloaden der Webseite automatisch generiert wird;
- der Schritt (A) des Übertragens einer Information, die für eine Anforderung des Zugriffs auf die Datenbank repräsentativ ist, vom ersten Endgeräts an das zweite Endgerät darin besteht, den zweidimensionalen Code an eine Softwareanwendung zu übertragen, die im zweiten Endgerät installiert ist.

9. Verfahren nach Anspruch 8, bei dem im Schritt (B) die Antwort auf die Zugriffsanforderung, die vom zweiten Endgerät an den Authentifizierungsserver gesendet wird, den zweidimensionalen Code beinhaltet, wobei der Authentifizierungsserver anschließend den empfangenen Code mit dem ursprünglich generierten Code vergleicht.

10. Telekommunikationsendgerät (T2), umfassend:
- Mittel (I/O) zum Empfangen einer Information, die für eine Anforderung des Zugriffs eines ersten Telekommunikationsendgeräts (T1) auf eine von einer Dienstplattform (PTF) in einem Telekommunikationsnetz (NW) gehostete Datenbank repräsentativ ist;
- Mittel (APP2) zum Generieren und Senden einer Antwort auf die Zugriffsanforderung an einen Authentifizierungsserver der Plattform, um eine Kennung eines Teilnehmers eines zweiten Telekommunikationsnetzes zu überprüfen, wobei die Teilnehmerkennung dem zweiten Endgerät entspricht, mit dem das Telekommunikationsendgerät verbunden ist, wobei die Antwort eine Kennung des ersten Endgeräts (T1) umfasst und die Teilnehmerkennung des zweiten Endgeräts (T2) umfasst, und den Zugriff auf die Datenbank durch das erste Endgerät in Abhängigkeit vom Ergebnis der Überprüfung freizugeben.

11. Endgerät nach Anspruch 10, aufweisend ferner Mensch-Maschine-Schnittstellenmittel, die geeignet sind, einem Benutzer des Endgeräts die für die Zugriffsanforderung repräsentative Information mitzuteilen und eine Antwort auf die Zugriffsanforderung an einen Authentifizierungsserver zu senden, nach einer Aktion des Benutzers, die über die Mensch-Maschine-Schnittstelle ausgeführt wird.

12. Endgerät nach einem der Ansprüche 10 oder 11, aufweisend grafische Schnittstellenmittel, die geeignet sind, Informationen zu den Zugriffsanforderungen und zum Stand der Verbindung mit der Dienstplattform für eine vorgegebene Gruppe von Telekommunikationsendgeräten anzuzeigen.

13. Authentifizierungsserver (AUTH) zum Ausführen eines Verfahrens zum Zugreifen auf eine Datenbank nach einem der Ansprüche 1 bis 9, wobei der Server umfasst:
- Mittel (I/O-A) zum Empfangen einer von einem zweiten Telekommunikationsendgerät (T2) kommenden Antwort auf eine Anforderung des Zugriffs eines ersten Telekommunikationsendgeräts (T1) auf die Datenbank, wobei die Antwort eine Kennung des ersten Endgeräts (T1) und eine Teilnehmerkennung des zweiten Endgeräts (T2) umfasst; und
- Mittel (APP-A) zum Überprüfen der Kennung des Teilnehmers eines zweiten Telekommunikationsnetzes, die dem zweiten Endgerät entspricht, nach dem Empfangen der Antwort auf eine Zugriffsanforderung, und zum Freigeben des Zugriffs auf die Datenbank durch das erste Endgerät in Abhängigkeit vom Ergebnis der Überprüfung.

14. Server nach Anspruch 13, aufweisend ferner:
- Mittel zum Empfangen einer vom ersten Endgerät kommenden Anforderung des Zugriffs auf die Datenbank, wobei die Anforderung eine Information zur Identifizierung eines Teilnehmers eines zweiten Telekommunikationsnetzes beinhaltet;
- Mittel zum Bestimmen eines zweiten Telekommunikationsendgeräts ausgehend von der Information zur Identifizierung des Teilnehmers, die der empfangenen Zugriffsanforderung entnommen wurde; und
- Mittel zum Übertragen einer Anfrage zur Berechtigung des Zugriffs des ersten Endgeräts auf die Datenbank an das zweite Endgerät.

15. Softwaremodul, das in ein Telekommunikationsendgerät nach einem der Ansprüche 10 bis 12 oder in einen Authentifizierungsserver nach Anspruch 13 oder 14 integriert ist, wobei das Softwaremodul Programmanweisungen enthält, deren Abarbeitung durch einen Computerprozessor es ermöglicht, ein Verfahren zum Zugreifen auf eine Datenbank nach einem der Ansprüche 1 bis 9 auszuführen.

## Claims

1. Method of access by a first telecommunications terminal (T1) to a database (SVR) hosted by a service platform (PTF) that is accessible via a telecommunications network (NW), including:
(A)- transmitting (E10, E12) to a second terminal (T2) associated with a subscriber identifier of a second telecommunications network, said subscriber identifier corresponding to the second terminal, information representative of a request from the first terminal to access the database;
(B)- in the second terminal (T2), sending (E14) a response to said access request to an authentication server (AUTH) of said platform, said response including an identifier of the first terminal (T1) and the subscriber identifier of the second terminal (T2);
(C)- in the authentication server (AUTH), when a response to the access request is received, verifying (E16) the identifier of the subscriber to said second network, and validating (E16) or not validating access to the database by the first terminal according to the result of said verification.

2. Method according to Claim 1, in which step (A) includes:
(a1) - in the first telecommunications terminal (T1), generating (E10) a request for access to the database, said request including information identifying said subscriber to the second telecommunications network, and sending the access request to the authentication server of the platform;
(a2) - in the authentication server (AUTH), determining (E12) the second telecommunications terminal from said subscriber identification information retrieved from the access request received, then transmitting (E12) to the second terminal (T2) a request for authorizing access of the first terminal to the database.

3. Method according to Claim 2, in which step (B) includes:
(b1) - notification of the request for authorizing access in the second terminal; and
(b2) - following an action by a user of the second terminal performed by means of a human-machine interface of the second terminal, sending a response to the request for authorizing access to the authentication server.

4. Method according to Claim 2 or 3, in which the telecommunications network is an Internet type network, and in which step (A) includes a preliminary operation of loading and displaying in the first terminal a web page for access to the authentication server of said platform, the access request to the authentication server following a command from the user of the first terminal transmitted via said web page.

5. Method according to any one of Claims 2 to 4, including the display in the second terminal of a graphical interface displaying information relating to access requests and to the state of connection with the service platform for a predetermined set of telecommunications terminals.

6. Method according to Claim 2, in which, for a predetermined list of first terminals identified in a list stored in the second terminal, a response to the access request received is automatically sent by the second terminal to the authentication server.

7. Method according to Claim 2, in which, for a predetermined list of first terminals identified in a list stored in the authentication server, the step (a2) of transmitting to the second terminal a request for authorizing access of the first terminal to the database is not implemented when said first terminal is identified as being a terminal in said list, access of the first terminal to the database being automatically validated.

8. Method according to Claim 1, including a preliminary operation of loading and displaying in the first terminal a web page for access to the authentication server of said platform, and in which:
- said web page for access to the authentication server of the service platform, displayed on a screen of the first terminal, represents a two-dimensional code automatically generated by the authentication server when said web page is downloaded;
- step (A) of transmitting information representative of a request for access to said database from the first terminal to the second terminal consists in transmitting said two-dimensional code to a software application installed in the second terminal.

9. Method according to Claim 8, in which, in step (B), the response to the access request sent by the second terminal to the authentication server includes said two-dimensional code, the authentication server then comparing the code received with the code generated initially.

10. Telecommunications terminal (T2) including:
- means (I/O) of receiving information representative of a request from a first telecommunications terminal (T1) to access a database hosted by a service platform (PTF) on a telecommunications network (NW);
- means (APP2) of generating and sending a response to said access request to an authentication server of said platform in order to verify a subscriber identifier of a second telecommunications network, said subscriber identifier corresponding to the second terminal, to which said telecommunications terminal is connected, said response including an identifier of the first terminal (T1) and the subscriber identifier of the second terminal (T2), and to validate access to the database by the first terminal according to the result of said verification.

11. Terminal according to Claim 10, further comprising human-machine interface means suitable for notifying a terminal user of said information representative of the access request, and sending a response to the access request to an authentication server, following an action by said user performed via the human-machine interface.

12. Terminal according to either of Claims 10 and 11, comprising graphical interface means suitable for displaying information relating to access requests and to the state of connection with the service platform for a predetermined set of telecommunications terminals.

13. Authentication server (AUTH) for the implementation of a method of access to a database, according to any one of Claims 1 to 9, said server including:
- means (I/O) of receiving a response to a request from a first telecommunications terminal (T1) to access said database from a second telecommunications terminal (T2), said response including an identifier of the first terminal (T1) and a subscriber identifier of the second terminal (T2); and
- means (APP-A) of verifying the subscriber identifier of a second telecommunications network corresponding to the second terminal following the reception of said response to an access request, and validating access to the database by the first terminal according to the result of said verification.

14. Server according to Claim 13, further comprising:
- means of receiving a request for access to the database from the first terminal, said request including information identifying a subscriber to a second telecommunications network;
- means of determining a second telecommunications terminal from said subscriber identification information retrieved from the access request received; and,
- means of transmitting to the second terminal a request for authorizing access of the first terminal to the database.

15. Software module incorporated into a telecommunications terminal according to any one of Claims 10 to 12, or into an authentication server according to Claim 13 or 14, said software module comprising program instructions the execution whereof by a computer processor is used to implement a method of access to a database, according to any one of Claims 1 to 9.
